# EUROPEAN PATENT APPLICATION

(11) **EP 1 071 160 A2**
(43) Date of publication of application: **24.01.2001**
(21) Application number: 00115574.6
(22) Date of filing: 19.07.2000
(51) Int. Cl.: H01Q 21/28, H01Q 3/26, H01Q 23/00, H01Q 1/00, H04B 7/15, H04B 7/155

(54) **Repeater with side-to-side arranged antennas and with adaptive feedback signal cancellation circuit**

(30) Priority: 20.07.1999 US 357032; 14.01.2000 US 483234
(71) Applicant: Andrew AG, 8184 Bachenbulach/Zürich (CH)
(72) Inventor: Judd, Mano D., Rockwell, TX 75032 (US); Maca, Gregory A., Rockwell, TX 75087 (US)
(74) Representative: Grünecker, Kinkeldey, Stockmair & Schwanhäusser Anwaltssozietät

(57) **Abstract**

A repeater system has at least one donor antenna element for communicating with a base station and at least one link antenna element for communicating with a remote station. A radio frequency uplink path and a radio frequency downlink path are coupled between the donor antenna and the null antenna. An adaptive cancellation circuit in each of the radio frequency uplink path and the radio frequency downlink path generates a cancellation signal, which when added to a radio frequency signal in either of the radio frequency uplink and radio frequency downlink paths, substantially cancels any feedback signal present in the radio frequency signal.

## Description

### BACKGROUND OF THE INVENTION

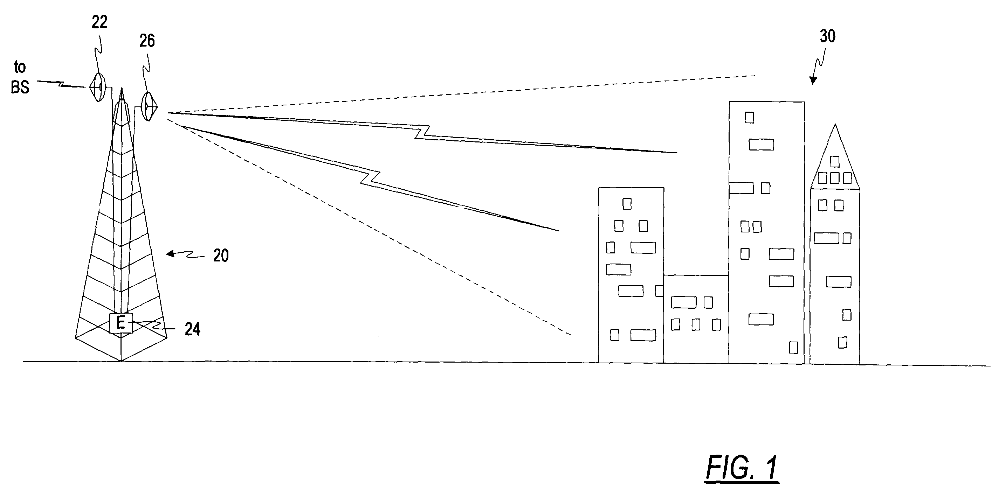

Repeater systems are typically used where the area to be covered and/or capacity requirements do not justify the installation of a full Cellular/PCS base station with managed frequency-channel allocation. Thus, as shown in FIG. 1, tower-mounted repeater systems are often used to extend the range of a cell site, to provide null fill in regions that are RF blocked, such as by bills or trees, and/or to provide enhanced "in-building" coverage, via directing the signal power to the desired structures, such as a building 30.

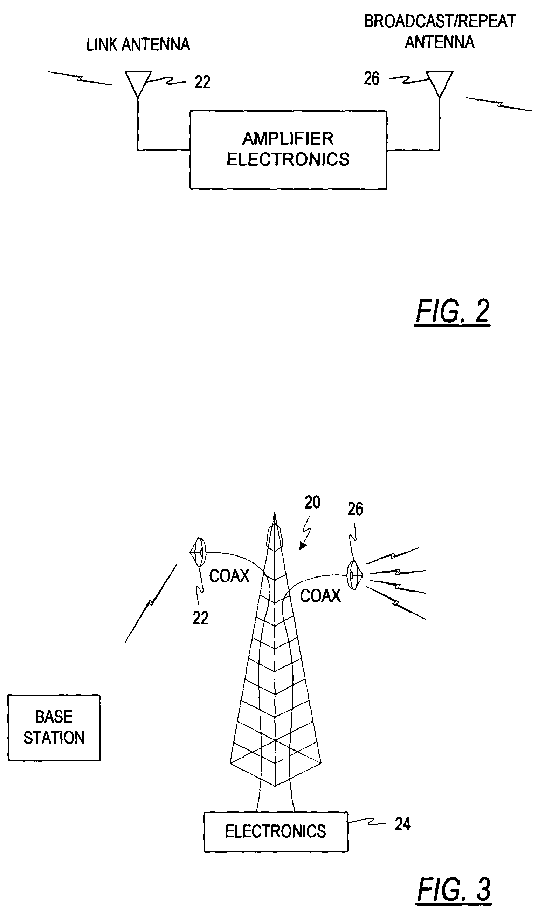

The typical repeater system comprises three basic parts shown in FIG. 2 and FIG. 3: the link antenna 22 which is directed/aimed at the wireless base station (BS); the amplifying electronics "box" 24, and the broadcast antenna 26 - which is directed towards the area of interest. Often, the link antenna 22 is highly directive (high gain) with a very narrow beam, since it only needs to "see" the base station. The broadcast antenna 26 is more defined by the beamwidth necessary to cover the intended area. The electronics box 24 may contain an assortment of diplexers, filters, splitters, and RF amplifiers.

Two of the main performance factors on which a system is based are gain and output power. The output power is mostly determined by the sum of the two passive antenna (link and broadcast) gains and the maximum (linear) output power of the amplifier(s). The system gain is determined by the sum of the passive antenna gains, plus the gain of the amplifier stage. This is limited by the isolation (or mutual coupling) between the two (broadcast and link) antennas. The isolation depends on the antenna type, front to back (F/B) ratio and beamwidth.

For example, assume two opposing antennas, each with 20 dB directivity. Further, assume a F/B ratio of about 25 dB. The isolation between antennas is therefore about 50 dB, which is the sum of the two F/B ratios (25 dB + 25 dB). To keep the amplifiers from oscillating, a safety factor of about 20 dB is recommended, which translates to an active (amplifier) gain to about 30 dB (50 - 20). However, the total system gain is the sum of the passive gains (directivity) plus the active gain, which, in this example, is 20+20+30 = 70 dB.

Normally, a well designed antenna should have a front to back ratio (F/B) better than 20 dB. For very high gain antennas, the F/B can be as high as 40 dB. However, as the F/B is increased, so typically is the directivity; which means that the antenna's beamwidth is narrowed. For repeater applications, this might prove disadvantageous, since the coverage area (sector width) is reduced.

Orientation and separation distance of the antennas is also a factor. In the near field, the propagation path loss is proportional to 1/R, where R is the radius or distance between the two antennas (note, it is 1/R² for the far field). Thus, for two PCS antennas, back to back, separated by about 10 feet, the propagation loss is about 24 dB. This therefore increases the isolation between the two antennas by 24 dB. However, it is now much harder to accurately orient the antennas, so that they are truly in-line, maximizing their F/B ratio isolation.

This is a significant issue for most operators (customers). Aligning the two antennas, such that they are exactly opposing (one pointed 180 degrees away from the other), can be extremely difficult and time consuming.

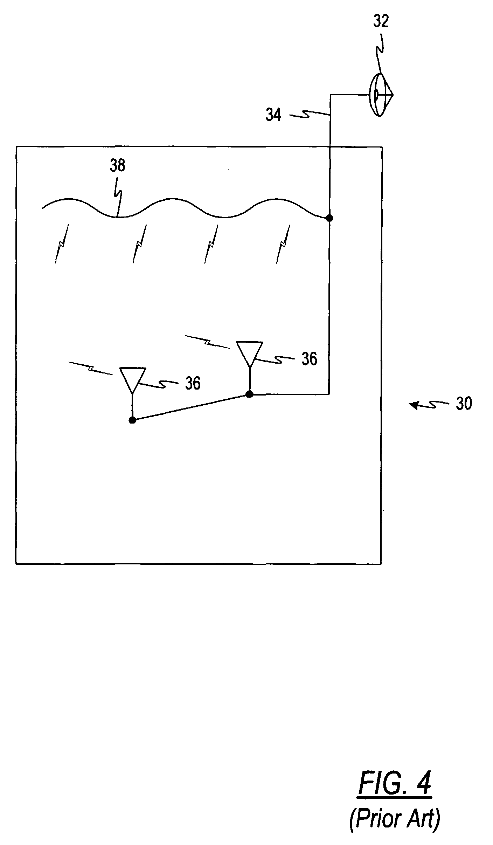

Existing indoor repeater systems, typically employ a separate link antenna 32, either on the roof, or on the side of a building (FIG. 4). The RF power is routed to the electronics portion of the repeater via a coaxial cable 34, often with an amplifier stage (not shown) in between. The indoor RF distribution system is either one or more antennas 36, or some other RF emission/reception mechanism, such as Radiax® (leaky wave) cable, or RF stripline cable 38. The labor for installing these indoor radiation systems (antennas or leaky wave cables) is usually intensive and costly. Additionally, since propagation characteristics inside a building are complex to estimate, or model, multiple radiators are usually used to assure adequate coverage to all portions of the building.

Existing repeater systems, mostly for outdoor use, use physically separate antennas (i.e., physically separate from the amplifier/electronics module/box), one pointed towards the wireless base station, and the other pointed towards the (broadcast) area of interest. This requires mounting/installation of three different units, and labor intensive orientation of the two antennas to maximize the RF isolation, to achieve maximum system gain.

Similar to the outdoor repeater system(s), indoor repeaters require accurate orientation (labor intensive) between the two antennas to insure maximum RF isolation, and to prevent signal feedBack and therefore "ringing" in the circuit.

This invention is further directed to a method and apparatus for improving the isolation between donor and null antennas in a repeater system.

In existing wireless technologies, such as Cellular, PCS (personal communication services), MMDS (multi-user multipath distribution system), WLL (wireless local loop), or the like, repeaters are used to extend coverage of cell sites (base stations) to areas that have low signal reception power, and therefore low signal to noise ratios. One of the principle technology drivers is that of system gain. That is, the higher the gain, the greater the range (distance) and coverage area for the system.

A limiting characteristic for repeaters is that of the feedback loop, or conversely, the isolation between the two opposing antennas (or sensors). That is, the total front to back (F/B) ratio for the system, or isolation, must be higher than the desired gain. Usually, repeaters employ at least one "link" or "donor" antenna which communicates with the base station and at least one broadcast, coverage, or "null" antenna which communicates with the remote stations or subscribers. Generally speaking, the isolation between link and null antennas is equal to the total gain plus some margin, typically around 10 to 15 dB. Therefore, the system gain will in general be less than the isolation minus the margin. For example, if the isolation between antennas is around 60 dB, then the maximum system gain allowed will be about 45 dB. For PCS frequencies, these figures result in a repeater range of less than 100 feet.

In a scattering environment, which is common in PCS, every 6 dB of additional system gain will double the coverage distance. Thus, obtaining an additional 24 dB of isolation between the two antennas, will allow the range to double 4 times, to 1600 feet. For conventional repeater systems, where the two antennas and repeater electronics are in three separate enclosures, and locations, the link (donor) antenna (to the base station) and broadcast (null) antenna (to the desired coverage area), are separated in space by (usually) more than 10 feet. This distance adds over 50 dB to the isolation between antennas, generating a total isolation value of well over 100 dB. Therefore, with a 15 dB margin, this type of system can utilize a total gain of up to 85 dB or more, which results in fairly large range and coverage.

For the side-to-side repeater technologies (as described in the above-referenced prior application), where the opposing antennas are in the same enclosure, and separated in space often by less than a few inches, the F/B ratio (or isolation) is typically limited to a value below 80 dB or so. This therefore allows a total system gain of no more than 65 dB, which limits the system range to a few hundred feet or less.

### SUMMARY OF THE INVENTION

A modular repeater comprises a housing having a pair of substantially 180° oppositely facing surfaces, at least one antenna element mounted to each of said surfaces for radiating energy in a direction opposite to that of an antenna element mounted to the other of said surfaces, and an electronic circuit mounted within said housing and operatively coupling signals between at least one antenna element on each of said oppositely facing surfaces of said module.

The invention also provides a method and apparatus for improving isolation between donor and null antennas in a repeater system.

The described embodiment of this aspect of the invention provides an adaptive cancellation approach which removes a significant portion (between 10 dB and 40 dB), of the feedback signal power, therefore increasing the total system isolation by the same amount (10 to 40 dB). This additional isolation can be used to achieve greater system gain, and therefore significantly extend the range of the system. This is especially useful in the side-side repeater technology approach mentioned above and described in the above-referenced application. The cancellation scheme uses digitally processed information to generate a signal, which, when added to the original input signal, cancels the feedback signal.

### BRIEF DESCRIPTION OF THE DRAWINGS

In the drawings:
FIG. 1 is a tower-mounted repeater system in accordance with the prior art;
FIG. 2 is a simplified schematic diagram of the tower-mounted repeater of FIG. 1;
FIG. 3 is a diagramatic representation of the tower-mounted repeater of FIG. 1;
FIG. 4 is a diagramatic representation of a prior art form of indoor repeater system;
FIG. 5 is a schematic representation of a repeater module in accordance with one embodiment of the invention;
FIG. 6 is a schematic representation of another form of repeater module in accordance with another embodiment of the invention;
FIG. 7 is a simplified illustration of one form of modular repeater in accordance with one form of the invention;
FIG. 8 is a simplified illustration of a second form of modular repeater in accordance with the invention;
FIGS. 9, 10 and 11 are a top view, an elevation and a front perspective view, respectively, of a repeater module in accordance with one embodiment of the invention;
FIGS. 12 and 13 are simplified illustrations of repeater modules in accordance with other forms of the invention;
FIG. 14 is a diagramatic representation of an in-building repeater system in accordance with the invention;
FIG. 15 is a diagramatic representation of another form of in-building repeater system in accordance with the invention;
FIG. 16 is a simplified perspective view similar to FIGS. 7 and 8, showing another embodiment of a modular repeater;
FIG. 17 is a block diagram of one form of a conventional repeater system;
FIG. 18 is a diagram of a typical repeater tower, with the conventional repeater system of FIG. 17;
FIG. 19 is a block diagram of another form of a conventional system (similar to FIG. 17), with four distinct input/output ports for separate uplink and downlink antennas;
FIG. 20 shows a tower-top arrangement, using the four-port system of FIG. 19;
FIG. 21 is a block diagram of one signal path through a repeater system;
FIG. 22 is a block diagram of one signal path through a repeater system, as in FIG. 21, adding an adaptive cancellation circuit;
FIG. 23 is a block diagram (high level) of a (digitally) adaptive cancellation circuit in accordance with one embodiment of the invention;
FIG. 24 is a block diagram (high level) of the (digitally) adaptive cancellation circuit of FIG. 23 which shows the technique in further detail;
FIG. 25 is a block diagram of a repeater system, similar to that of FIG. 17, using the adaptive cancellation (AC) circuit of FIGS. 23 and 24;
FIGS. 26 and 27 show the directional characteristics of the AC blocks, for the downlink path (FIG. 26) and the uplink path (FIG. 27);
FIGS. 28 and 30 show two examples of side-to-side repeaters; and
FIGS. 29 and 31 show block diagrams of the AC approach of the invention, applied to the side-to-side repeater systems of FIGS. 28 and 30, respectively.

### DETAILED DESCRIPTION OF THE ILLUSTRATED EMBODIMENTS

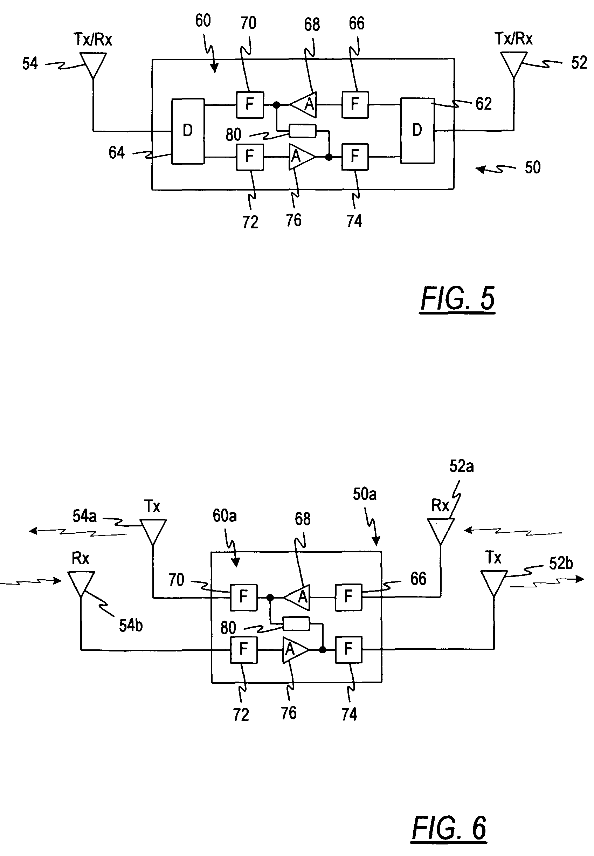

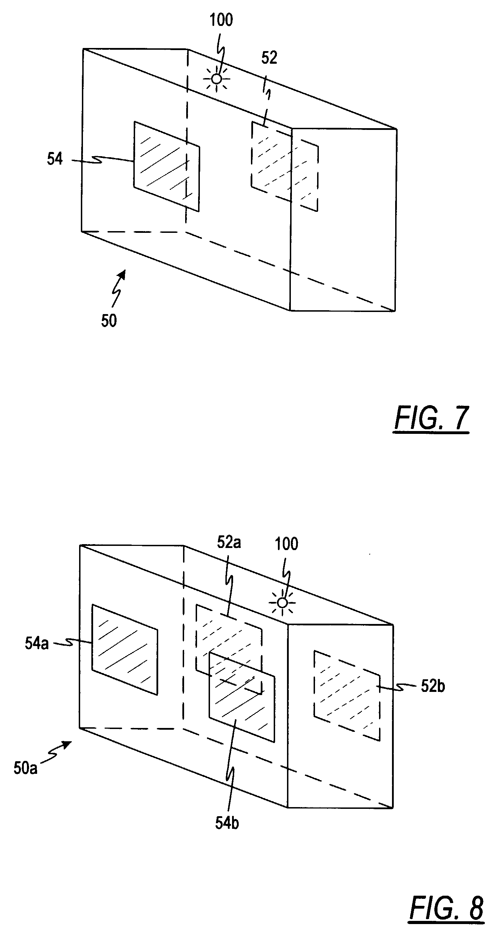

In the embodiments illustrated in FIGS. 5-8, all of the components are provided in a compact modular form, as a "repeater module" 50. Two antennas 52, 54 (or sets of antennas in the embodiment of FIGS. 6 and 8) are located on the exterior of two sides of a module housing, body or "box" 56. Two different system architectures are shown in FIGS. 5 and 6. FIG. 5 shows an architecture for a two antenna system, in which each antenna operates in both the transmit and receive mode. For example, the first antenna 52 might be used to receive an incoming RF signal from a transmitter or from another repeater, that is, in the link mode. This antenna and the associated circuitry to be described below would therefore usually operate in the frequency band of the incoming RF signal or signals to be received. The other antenna 54 would be utilized in the broadcast/repeat mode to transmit (and receive) signals to the user equipment, such as a remote handset or terminal, or to transmit a signal to a further repeater in a system using multiple repeaters to broadcast or distribute signals. Therefore, this second antenna 54 and its associated circuits, described below, would usually operate in the frequency band of the remote handset or terminal.

Frequency diplexers (D) 62, 64 are used in the electronics module 60, to separate the power for each path. For example, RF power received on antenna 52 is routed through the diplexer 62 through a first circuit or path. This first circuit includes a filter 66 to attenuate the reverse link band, an amplifier 68 to amplify the RF, and then another filter 70, used to protect the amplifier 68 from signal power on the other circuit or path. The second diplexer 64 then delivers the signal to antenna 54 which retransmits the signal. In the reverse direction, antenna 54 receives a signal which is fed through diplexer 64 to a second circuit or path including similar filters 72, 74 and a similar amplifier 76 which operate in the same manner as the first circuit and feed a signal through a diplexer 62 to be transmitted at the antenna 52.

FIG. 6 shows two sets of antennas: 52a, 54a and 52b, 54b, two antennas for the link mode and two for the broadcast/repeat mode. When two sets of antennas are utilized, the antennas 52a, 52b on one side may be used for the link mode, as described above, one as the downlink antenna and one as an uplink antenna. Similarly, the two antennas 52b, 54b on the other side would be used in the broadcast/repeat mode, as described above, one as an uplink antenna and one as a downlink antenna. Similar electronic circuits or paths including filters and amplifiers are interposed between the respective pairs of antennas 52a, 54a and 52b, 54b. However, because separate pairs of antennas are provided, no frequency diplexers are required in this case.

The filters 66, 70, 72, 74 are selected so as to be sufficient to reduce the out-of-band signals. The filters are usually band pass types. For a PCS based system, the band pass bandwidth will usually be around 15 Mhz, commensurate with the bandwidth of PCS bands C, D, E, F, etc. Cut off and roll-off are more performance and spec oriented, and depend on circuit design.

In one embodiment, the amplifier elements 68, 76 comprise relatively low power, linear integrated circuit chip components, such as monolithic microwave integrated circuit (MMIC) chips. These chips may comprise chips made by the Gallium Arsenide (GaAs) heterojunction transistor manufacturing process. However, silicon process chips or CMOS process chips might also be utilized.

Some examples of MMIC power amplifier chips are as follows:
1. RF Microdevices PCS linear power amplifier RF 2125P, RF 2125, RF 2126 or RF 2146, RF Micro Devices, Inc., 7625 Thorndike Road, Greensboro, NC 27409, or 7341-D W. Friendly Ave., Greensboro, NC 27410;
2. Pacific Monolithics PM 2112 single supply RF IC power amplifier, Pacific Monolithics, Inc., 1308 Moffett Park Drive, Sunnyvale, CA;
3. Siemens CGY191, CGY180 or CGY181, GaAs MMIC dual mode power amplifier, Siemens AG, 1301 Avenue of the Americas, New York, NY;
4. Stanford Microdevices SMM-208, SMM-210 or SXT-124, Stanford Microdevices, 522 Almanor Avenue, Sunnyvale, CA;
5. Motorola MRFIC1817 or MRFIC1818, Motorola Inc., 505 Barton Springs Road, Austin, TX;
6. Hewlett Packard HPMX-3003, Hewlett Packard Inc., 933 East Campbell Road, Richardson, TX;
7. Anadigics AWT1922, Anadigics, 35 Technology Drive, Warren, NJ 07059;
8. SEI Ltd. P0501913H, 1, Taya-cho, Sakae-ku, Yokohama, Japan; and
9. Celeritek CFK2062-P3, CCS1930 or CFK2162-P3, Celeritek, 3236 Scott Blvd., Santa Clara, CA 95054.

FIGS. 7, 8 and 16 show examples of the physical systems or modules 50, 50a, and 50b. FIGS. 7 and 8 correspond respectively to the systems described above with reference FIGS. 5 and 6. In these examples, microstrip patches are used for the antenna elements 52, 54 (FIG. 7) and 52a, 52b, 54a, 54b (FIG. 8). The two antennas (Tx and Rx) on each face of the module in FIG. 8 operate similarly to the single Tx/Rx antenna element on each face in FIG. 7. The module/box or housing 50, 50a may be a metal box containing a DC power supply or DC power converter, amplifiers, filters and diplexers (if required), as described above with reference to FIGS. 5 and 6. The electronics are inside the box or module and may be discrete parts, connected together via SMA connectors. For lower power systems, the electronics can be surface mount PCB.

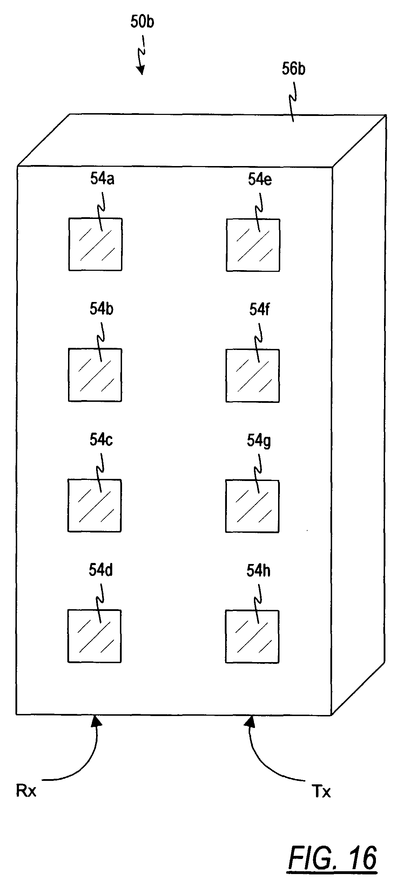

The antennas can be conformal types, such as microstrip patches, or dipoles or monopoles. However, all components are part of a single package or module. FIG. 16 illustrates an approach which uses an array of antenna elements in order to increase the passive gain. The example shown in FIG. 16 uses two columns of patch array antennas on one face of the module, designated by reference numerals 54a through 54h. The antenna patches 54a through 54d are designated as receive (Rx) antennas in the embodiment shown on FIG. 16 while the antenna elements 54e through 54h are designated as transmit (Tx) antenna elements in this embodiment. It will be appreciated that a similar array of antenna elements corresponding to the antenna elements 52 of the prior embodiments would be mounted to the opposite face (not shown) of the repeater module 50b of FIG. 16. Moreover, fewer or more array elements might be utilized in other patterns than that shown on FIG. 16, without departing from the invention.

In the embodiment shown on FIG. 16, the use of four elements, which are summed together in an array, would achieve approximately four times (6dB) the gain of a single receive or transmit element such as the element 54 shown in FIG. 7, for example. Thus, with four elements also on the opposite face (not shown), this adds a total of 12 dBi of additional passive gain to the system, which can be used to reduce the required active gain by as much as 12 dB and also to reduce the required isolation by as much as 12 dB. While the near field wave mechanics might not permit a full 12 dB to be achieved, nonetheless, some considerable improvement can be expected from this approach. However, it is noted that the vertical beam width of the system will be reduced somewhat by this approach.

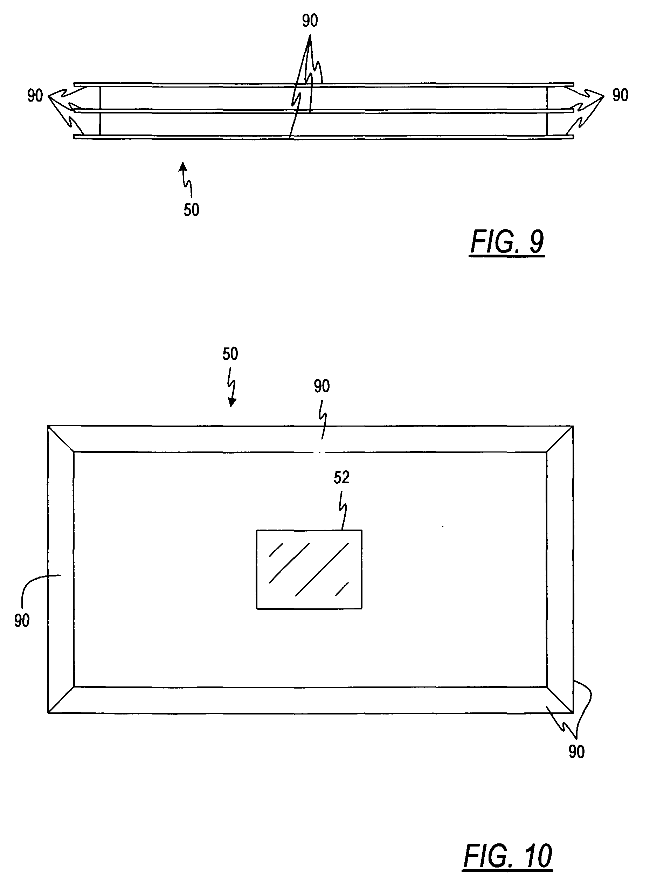

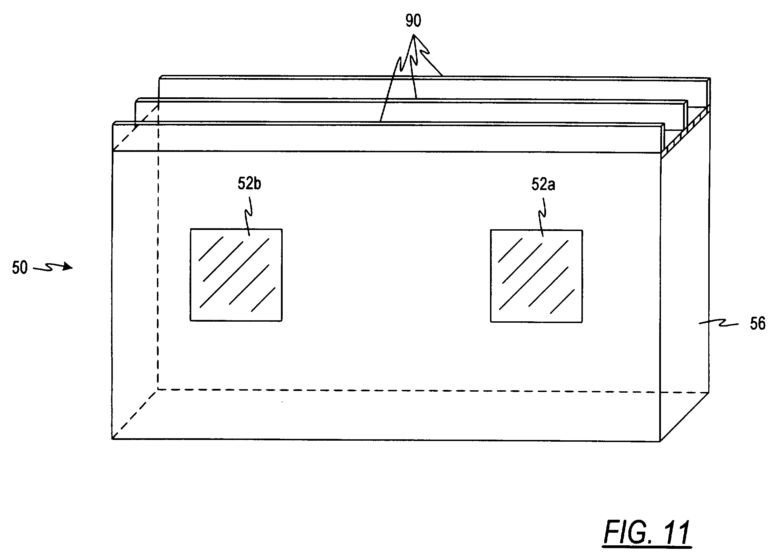

The respective antennas of FIGS. 7, 8 and 16 are "fixed" in position and orientation. The position and orientation of antennas is designed to assure maximum isolation between the antennas and to receive and transmit a given signal, and therefore maximize system gain. This isolation between antennas is controlled/maximized (and mutual coupling minimized) in the following ways:
a) The two antennas (or sets of antennas) are positioned such that for each, the F/B ratios sum to a maximum. For example, for a perfectly rectilinear module, the two antennas (or sets of antennas) each face oppositely by 180 degrees, or within an acceptable tolerance.
b) The two antennas of each path, are polarized in mutually orthogonal (perpendicular) directions, which further reduces the mutual coupling (increases the isolation) by roughly 20 to 30 dB. For example, elements 52, 52a, 52b may be horizontally polarized, and elements 54, 54a, 54b may be vertically polarized, or vice-versa.
c) Electromagnetic shunt elements 90 (see FIG. 9) may also be provided on the edges or borders of the module or housing structure 50, 50a to absorb (shunt) power to ground. This reduces the wave coupling from an antenna on one side, to an antenna on the other side. FIG. 11 shows only the top shunt element 90, it being understood that similar shunt elements 90 (not shown in FIG. 11, but shown in FIGS. 9 and 10), would be used on the other three lateral sides, as indicated in FIGS. 9 and 10. These shunts or RF chokes 90 may be extruded of electrically-conductive metallic material, and project from the four sides of the housing 56 to absorb stray electromagnetic energy, which is ported to ground. Alternatively, the four sides of the housing (i.e., excluding the two sides on which the antennas are mounted) may be composed of metallic material and grounded so as to shunt stray electromagnetic energy to ground. However, the projecting fins or strips of the shunt elements 90 improve on this situation, by receiving stray RF energy like an antenna, and being shorted to the ground plane. Alternatively, the shunts or RF chokes 90 may be extruded of plastic or other extrudable material and metal-coated. The height or projection of the fins of the shunts 90 relative to the sides of the housing may be on the order of a quarter wavelength relative to the frequencies of the transmitting antenna element or elements.

Design of the antennas, beams, and (control of) F/B ratios assures adequate isolation between the two opposing antennas (or antenna sets). The antennas' F/B ratios or isolation is the largest limiter for the total system gain.

A small lamp, LED, or other display element 100 can be used (see FIGS. 7 and 8) with appropriate RF power sensing electronics 80 (see FIGS. 5 and 6) to aid the provider/user/customer in orienting the unit or module 50 or 50a or 50b with a link antenna directed/pointed towards a base station, such that sufficient signal power is being received, i.e., at or above some predetermined threshold.

The above described repeater modules can be used in a number of applications, a few examples of which are as follows.

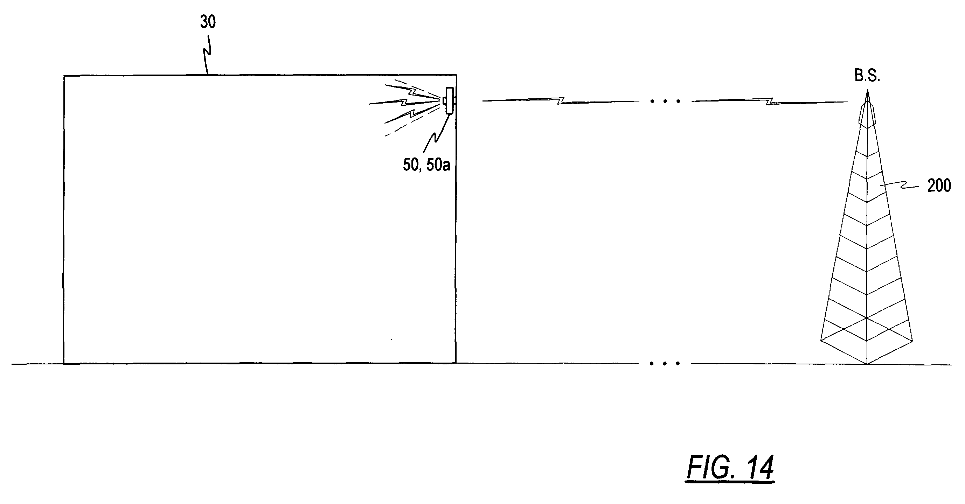

### 1) Indoor Repeater (see FIG. 14)

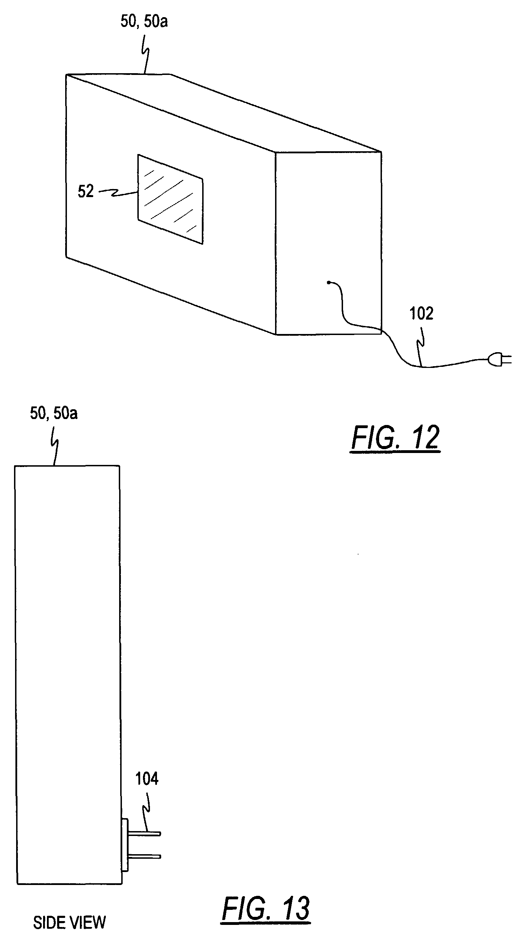

The module 50 or 50a can be mounted on a wall or window, at or near a location where the RF signal power from a nearby base station is at its maximum power level (within the building). Power for each module can be via either a 120 volt cord and plug 102, or with a 120 volt plug connection 104, built directly into the module (see FIGS. 12 and 13). Both allow very simple installation, by the customer. Generally, the RF signal is received, at a power level above the noise floor, from a nearby base station (with the module placed in a location facing the base station), and the repeater re-radiates the (amplified) RF signal into the building. Additionally, signals from remote units (handsets/cellphones) within the building are received by the modules 50 (50a, 50b), amplified, and re-radiated back to the base station 200.

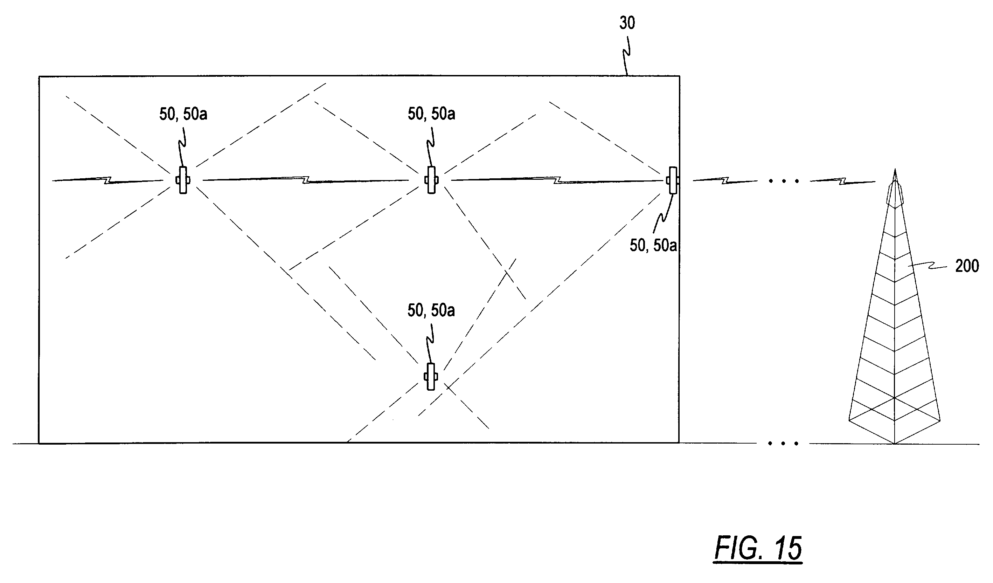

### 2) Daisy-Chained Indoor Repeater (see FIG. 15)

A plurality of repeater modules 50 or 50a or 50b are placed at various locations within a building, "daisy chained" together, to provide greater coverage within the building. Power for each module can be via either a 120 volt cord and plug 102, or with a 120 volt plug connection 104, built directly into the module (see FIGS. 12 and 13). Both allow very simple installation, by the customer. This aids in providing coverage to the side of the building opposite to the base station, or any other RF null or "blank" areas within the building. In this way, the provider or customer can cheaply and easily install two or more modules, to provide coverage to various area(s) of the building, such as the side opposite the side nearest the base station, where the RF signal level (from the base station) has low Signal to Noise (ratio), or where there is no signal at all.

### 3) Outdoor Null Fill Repeater

A single module can be installed on a tower, instead of a more conventional unit requiring discrete antennas. This provides a smaller more economical package, and less labor (time) and effort in orienting the antennas to assure adequate isolation between the antennas.

### 4) Outdoor Repeater to Building

A single module can be installed on a tower, in the same fashion as above, realizing the same benefits.

The applications mentioned above in 1)-4) are independent of frequency band. That is, any of these applications might be used in any frequency band, including, but not limited to, the following:
a) Cellular (800 MHz band)
b) PCS (1800 and 1900 MHz bands) - (Personal Communications Service)
c) GSM (900 and 1800 MHz bands) - (Global System for Mobile communications)
d) MMDS (2500 MHz band) - (Multi-channel Multipoint Distribution Service)
e) LMDS (26 GHz band) - (Local Multipoint Distribution Service)
f) Bluetooth Applications (2400 MHz band) - (Bluetooth is the name of a wireless protocol standard, created by Ericsson)
g) Indoor Wireless LANs (2400 MHz band) - (Local Area Network)
h) 3G (3rd Generation PCS systems) at 1900 MHz (U.S.) and 1800-2200 MHz (Europe)

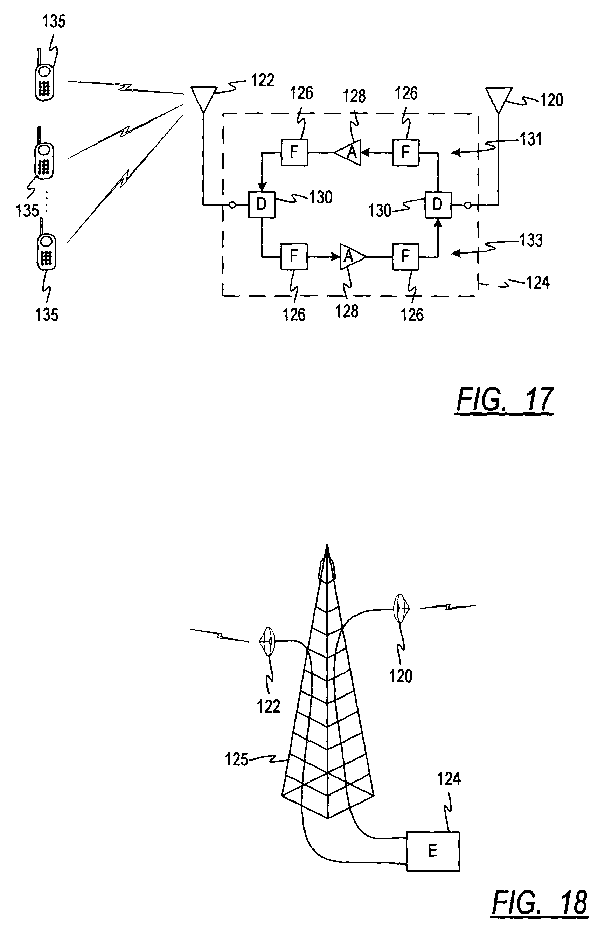

FIG. 17 shows a block diagram of a conventional repeater system, showing three distinct elements: the link (or "donor") antenna, the coverage (or "null") antenna 122, and the repeater electronics 124. The typical repeater electronic system 124 incorporates bandpass filters 126, for the uplink and downlink bands, as well as power amplifiers 128 and frequency diplexers 130. The filters 126 and amplifiers 128 are arranged as a pair of signal transmission circuits 131 (downlink) and 133 (uplink). In each circuit 131, 133, a first filter 126 attenuates the bandwidth of incoming communications signals, an amplifier 128 amplifies the signals from the first filter, and a second filter 126 located at the output of the amplifier protects the amplifier 128 from signal power in the other branches of the circuits 131, 133. The illustrated system in FIG. 17 is based on a "straight through" design, in which the signals go in a single direction through each branch or path (i.e., uplink and downlink) of the system.

FIG. 18 shows a diagram of a typical repeater tower 125, with the system of FIG. 17, including the link (or "donor") antenna 120, the coverage (or "null") antenna 122, and the repeater electronics 124. This system could also be installed on the top of a building, or within a building (for in-building coverage).

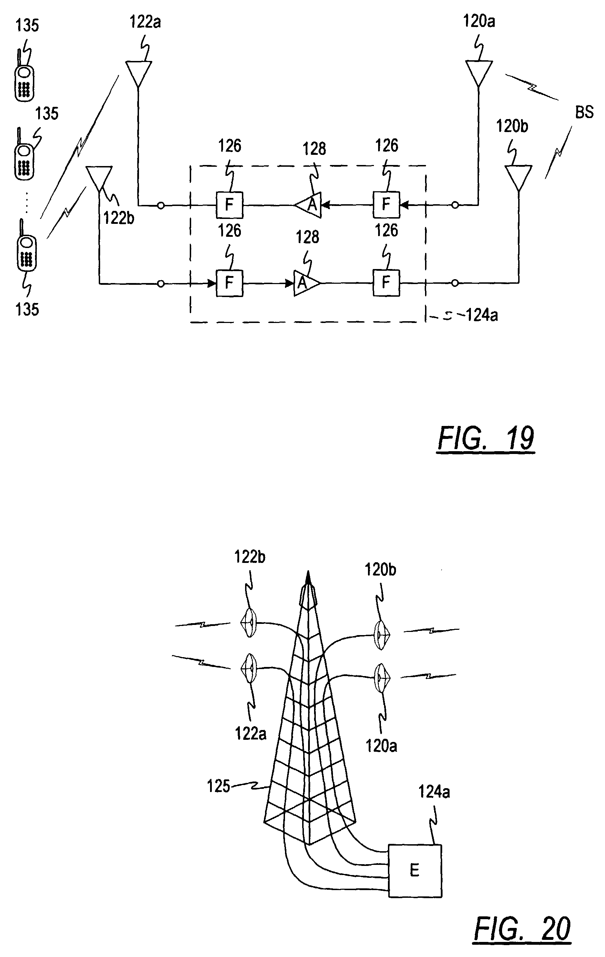

FIG. 19 shows a similar system to that of FIG. 17, but with four distinct input/output ports. In this system, the signals from each path are not combined by frequency diplexers. Additionally, this system requires four, rather than two, antennas. Accordingly, FIG. 19 shows two donor antennas 120a and 120b, designated as the downlink and uplink to the base station (BS). Similarly, on the broadcast or coverage side, two null antennas 122a, 122b are shown, one functioning as the uplink and one as the downlink antenna relative to the remote units or subscriber equipment 135. Since separate antennas are used respectively for the uplink and downlink between the base station and the remote units, separate paths through the electronics 124a, each including their own filters 126 and amplifier 128 are provided, and diplexers such as the diplexers 130 of FIG. 17 are not utilized.

FIG. 20 shows a tower arrangement, using the four-port system of FIG. 19. In FIG. 20, the respective downlink and uplink antennas 120a, 122a and 120b, 122b between the base station and the remotes are illustrated on the tower 125, with the electronics 124a of FIG. 19 being located at the base of the tower 125.

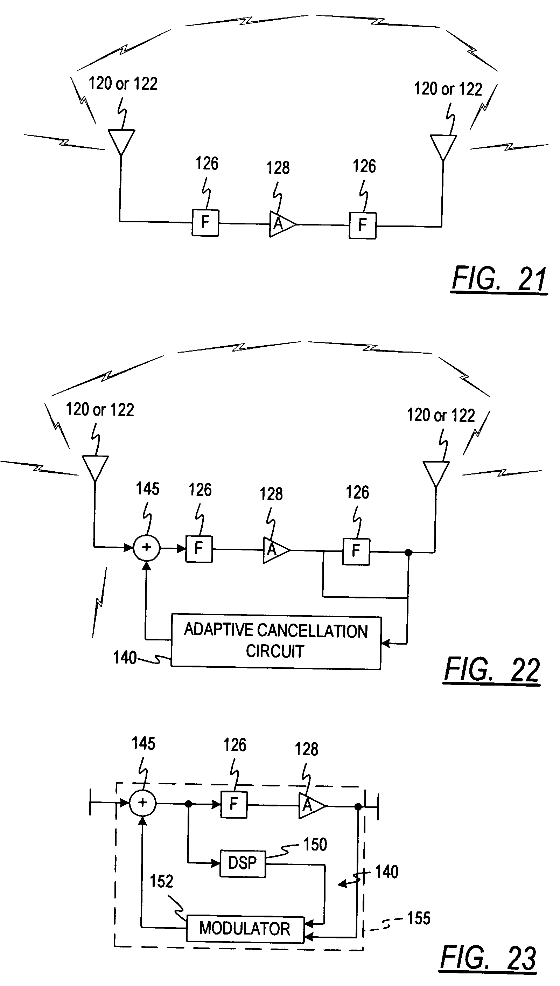

FIG. 21 shows a block diagram of one path through a repeater system. The input signal, S(t), either from the base station (for the downlink path), or from the remote (for the uplink path), is received via an antenna, bandpass filtered, amplified (with active gain = G), filtered again, and finally transmitted by an antenna. Some of the transmitted signal energy couples back (through space, or through the electronics) into the receive antenna. This is denoted in FIG. 21 as the feedback signal, f(t), which is simply a delayed version (attenuated) of the original signal, S(t). Therefore, the composite signal, S(t) + f(t), is fed into the amplifier, with output G(S(t) + f(t)). Assume for example, that the antennas have 0 dBi gain, then the new feedback signal it G f(t). The propagation of this signal, back to the input antenna, will incur attenuation, H. Therefore, the amplified, attenuated signal at the input antenna will be H G f(t). If this signal is comparable in power to the original signal S(t), then the amplifier 128 will go unstable, and oscillate (ring). This oscillation will cause severe distortion in the desired signal.

FIG. 22 shows the same circuit as FIG. 21; however, adding an adaptive cancellation circuit 140. The goal of this circuit 140 is to create a inverse f(t) signal -f(t) (a 180 degree shifted f(t) signal), and sum it with the input signal; including the feedback signal, f(t) at a summing junction 145, and thereby remove the feedback signal f(t).

FIG. 23 shows a general block diagram (high level) of one form of the adaptive cancellation circuit 140. In this approach, the input (RF) signal is summed at the junction 145 with a modulated signal constructed via a digitally adaptive process, to destructively interfere with the feedback signal embedded in the input composite signal. After the summation, the composite signal, S(t) + f(t), is digitally sampled and digitally processed via a digital signal processor (DSP) 150, which computes an intermediate signal for a modulator 152. The modulator 152 takes the intermediate signal, and a sample of the amplified (output) signal, and creates a near copy of the correct inverted f(t) signal -f(t). This process will work with many, if not most, of the digitally adaptive algorithms for feedback control. Additionally, this methodology does not require a injected signal (training or pilot tone, or wideband noise), for the adaptive process. The entire circuit shown in FIG. 23 may be designated as an "AC block" 155.

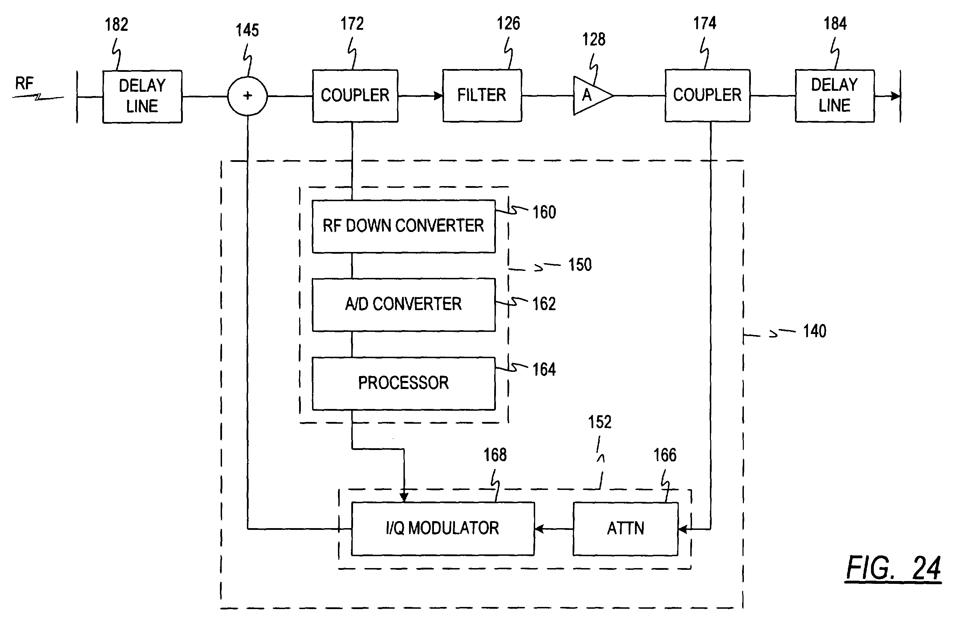

FIG. 24 shows the circuit 140 in further detail. The DSP 150 is a combination of an RF downconverter 162 to shift the signal to an intermediate frequency that allows digital sampling, an analog-to-digital (A/D) converter 162 which digitizes the analog signal, and a processor 164 which performs the required operations to compute the intermediate signal. The modulator 152 is a combination of a controllable attenuator 166, and an I/Q modulator 168. Additional details shown in FIG. 24 include respective couplers 172 and 174 which couple the signals from the signal path to and from the adaptive cancellation circuit 140, a first coupler 172 being interposed between the summation junction 145 and the filter 126 and the second coupler 174 being at the output of the power amplifier 128. In addition to the couplers 172 and 174 respective delay lines 182 and 184 may be employed at either end of the RF path, one just prior to the summing junction 145 and one subsequent to the coupler 174.

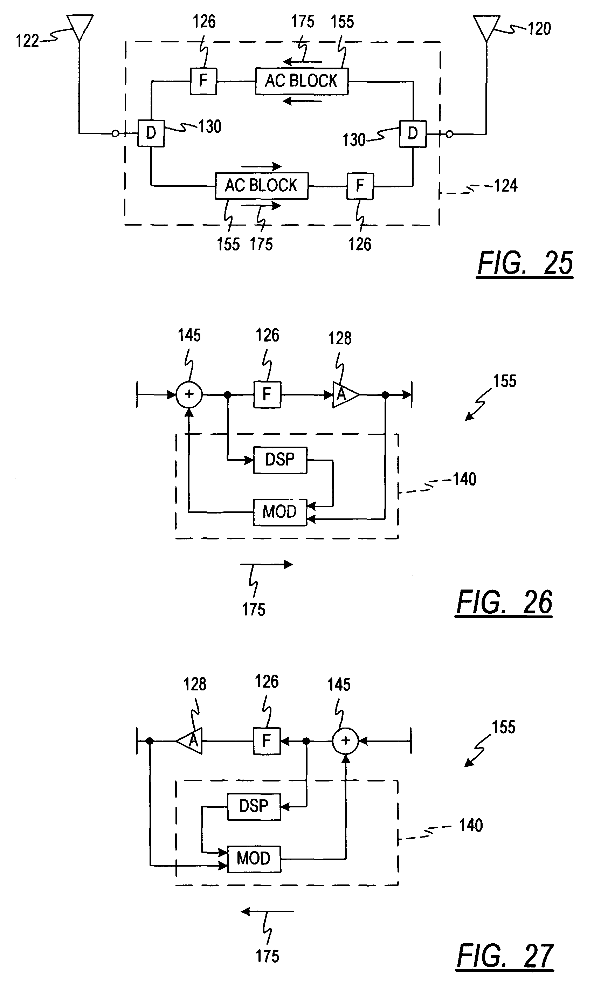

FIG. 25 shows a block diagram of a repeater system, similar to that of FIG. 17, however using adaptive cancellation (AC) circuit blocks 155, details of which are shown in FIGS. 26 and 27, as well as in FIGS. 23 and 24. The "direction" of the circuit (AC block) 155 in each RF path has been taken into account. In this system, each (uplink, downlink) path has a separate AC circuit block 155.

FIGS. 26 and 27 show the directional characteristics of the AC circuit blocks 155, whether for the downlink or uplink path. The blocks are "mirror images" of one another, differing by the direction of the desired signal, with the arrows 175 denoting the directionality of each circuit 155, in FIGS. 25, 26 and 27.

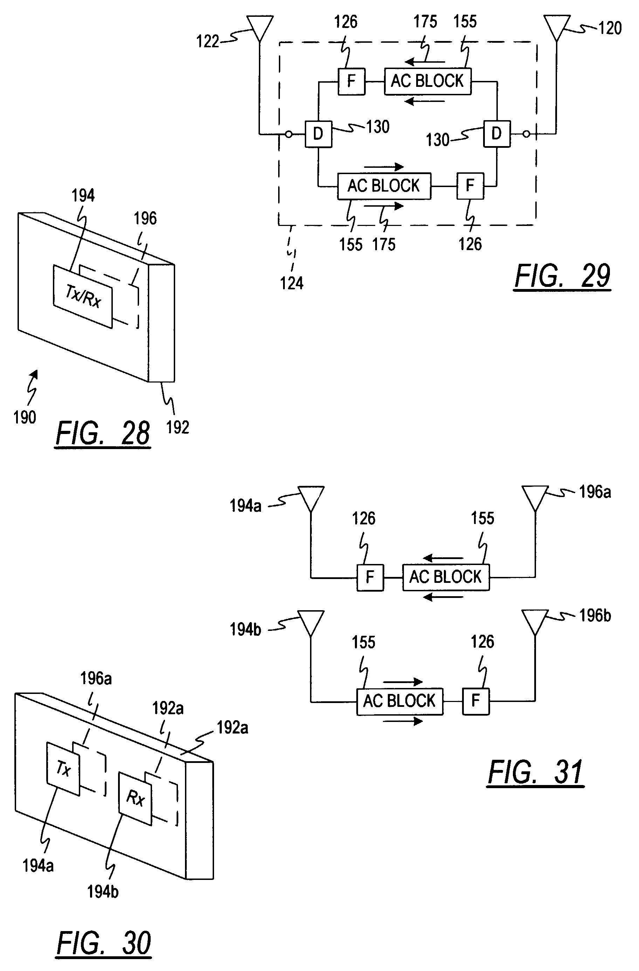

FIGS. 29 and 31 show block diagrams of the adaptive cancellation (AC) approach, applied to side-to-side repeater systems, such as the ones shown and described above. FIG. 28 shows a side-to-side repeater having a body or housing 192 having opposed flat surfaces. To each of these opposed flat surfaces, there is mounted a single patch antenna element 194, 196, respectively comprising the null and donor antennas. An equivalent circuit diagram is shown in FIG. 29. It will be understood that the circuit components of FIG. 29, including the adaptive cancellation (AC) circuits, may be carried in the body or housing 192.

Similarly, FIG. 30 shows a side-to-side repeater structure 90a having a similar body or housing 192a which mounts separate uplink and downlink transmit (Tx) and receive (Rx) patch antenna elements for each of the null and donor antennas. The respective Tx and Rx null antennas are designated by reference numerals 194a and 194b, while the respective Tx and Rx donor antenna elements are designated by reference numerals 196a and 196b. The circuits shown in FIG. 31 may be mounted to (in) the body (housing) 192a.

As indicated above, the electronics, i.e., the adaptive cancellation circuits, may be carried on/in the body/housing 192, 192a of the antenna element in the side-to-side repeater structures of FIGS. 28 and 30, permitting a tower-top modular repeater installation, in addition to the other advantages, and/or use in other applications as more fully discussed and described in the above-referenced prior application.

As indicated above, FIGS. 28 and 29 show the case for a single antenna (element) on each side, including frequency diplexers to separate each path (or frequency band). FIG. 30 and 31 show the approach when using separate Tx and Rx antennas, and therefore separate circuits, for each (uplink, downlink) path.

The above-described approach may be used in a number of applications, including: Cellular Coverage (null fill, in-building systems), PCS, MMDS, WLL and LMDS.

While particular embodiments and applications of the present invention have been illustrated and described, it is to be understood that the invention is not limited to the precise construction and compositions disclosed herein and that various modifications, changes, and variations may be apparent from the foregoing descriptions without departing from the spirit and scope of the invention as defined in the appended claims.

## Claims

1. A modular repeater comprising:
a housing having a pair of substantially 180° oppositely facing surfaces;
at least one antenna element mounted to each of said surfaces for radiating energy in a direction opposite to that of the antenna element mounted to the other of said surfaces; and
an electronic circuit mounted within said housing and operatively coupling signals between at least one antenna element on each of said pair of oppositely facing surfaces of said module.

2. The repeater of claim 1 wherein a single antenna element is mounted to each of said oppositely facing surfaces of said housing and wherein said electronic circuit comprises a frequency diplexer operatively coupled with each of said antennas and a pair of signal transmission circuits coupled between said frequency diplexers.

3. The repeater of claim 2 wherein each of said signal transmission circuits transmits a signal in one direction between said two antenna elements, each of said signal transmission circuits comprising a first filter to attenuate the bandwidth of incoming communications signals, an amplifier to amplify communications signals received from said first filter and a second filter located at an output of said amplifier to protect the amplifier from signal power in the other signal transmission circuit.

4. The repeater of claim 1 wherein two antenna elements are mounted to each side of said module housing, one for transmitting communications signals and one for receiving communications signals.

5. The repeater of claim 4 wherein said electronic circuit comprises a pair of signal transmission circuits, each forming a signal path between a transmitting antenna on one surface of said housing and a receiving antenna on the opposite surface of said housing, and wherein each of said signal transmission circuits comprises a first filter to attenuate the bandwidth of incoming communications signals, an amplifier which amplifies communications signals received from the first filter, and a second filter located at an output of said amplifier to protect the amplifier from signal power in the other of said signal transmission circuits.

6. The repeater of claim 1 wherein each of said antenna elements comprises a microstrip patch.

7. The repeater of claim 1 and further including a plurality of electromagnetic shunt elements located along surfaces of said housing which join said oppositely facing surfaces on which said antenna elements are located.

8. The repeater of claim 1 wherein said electronic circuit includes a signal strength circuit and further including a display element operatively coupled with said signal strength circuit and visible from externally of said housing for indicating alignment of said modular repeater with a signal source providing signal strength equal to or greater than a preselected threshold.

9. The repeater of claim 1 and further including one of an AC power cord and an AC power plug extending from said housing for coupling said modular repeater to a source of AC power, said AC power plug also being capable of mounting said modular repeater to an AC wall receptacle.

10. An indoor repeater system for use in an enclosed area such as a building or the like, comprising a plurality of repeater modules, at least one of said repeater modules being mounted in a location for receiving an optimal signal level from a signal source external to said enclosed area, and the other repeater modules being placed for distributing communication signals around at least a desired portion of the enclosed area, each of said repeater modules comprising:
a housing having a pair of substantially 180° oppositely facing surfaces;
at least one antenna element mounted to each of said surfaces for radiating energy in a direction opposite to that of the antenna element mounted to the other of said surfaces; and
an electronic circuit mounted within said housing and operatively coupling signals between at least one antenna element on each of said oppositely facing surfaces of said module.

11. The modular repeater of claim 1, wherein each of said antenna elements comprises an array of microstrip patch elements.

12. The repeater of claim 10, wherein each of said antenna elements comprises an array of microstrip patch elements.

13. A method of constructing a modular repeater comprising:
providing a housing having a pair of substantially 180° oppositely facing surfaces;
mounting at least one antenna element mounted to each of said oppositely facing surfaces for radiating energy in a direction opposite to that of the antenna element mounted to the other of said oppositely facing surfaces;
mounting an electronic circuit within said housing, said electronic circuit operatively coupling signals between at least one antenna element on each of said pair of oppositely facing surfaces of said module.

14. The method of claim 13 including mounting two antenna elements to each side of said module housing, one for transmitting communications signals and one for receiving communications signals.

15. The method of claim 13 and further including positioning a plurality of electromagnetic shunt elements along surfaces of said housing which join said oppositely facing surfaces on which said antenna elements are located.

16. The method of claim 13 including said electronic circuit determining signal strength and further including coupling a display element with said electronic circuit and mounting said display element so as to be visible from externally of said housing for indicating alignment of said modular repeater with a signal source providing a signal strength equal to or greater than a preselected threshold.

17. The method of claim 1 and further including extending one of an AC power cord and an AC power plug from said housing for coupling said modular repeater to a source of AC power, said AC power plug also being capable of mounting said modular repeater to an AC wall receptacle.

18. A repeater system comprising:
at least one donor antenna element for communicating with a base station and at least one null antenna element for communicating with a remote station;
a radio frequency uplink path and a radio frequency downlink path coupled between said donor antenna and said null antenna; and
an adaptive cancellation circuit in at least one of said radio frequency up link path and said radio frequency downlink path, which generates a cancellation signal, which when added to a radio frequency signal in either of said radio frequency uplink and radio frequency downlink paths, substantially cancels any feedback signal present in said radio frequency signal.

19. The repeater system of claim 18 wherein said adaptive cancellation circuit comprises a digital signal processor circuit which receives an incoming radio frequency signal from one of said radio frequency uplink and downlink paths, said radio frequency signal having a feedback signal component, and which digitally samples and processes said incoming radio frequency signal to generate an intermediate frequency signal, and a modulator circuit which receives said intermediate frequency signal and a sample of a radio frequency output signal from said one of said radio frequency uplink and downlink paths and generates said cancellation signal.

20. The system of claim 19 wherein said digital signal processor comprises a radio frequency downconverter which converts said incoming radio frequency signal to a lower frequency signal for digital sampling, an analog-to-digital converter coupled to the radio frequency downconverter, which analog-to-digital converter digitizes said lower frequency signal, and a processor coupled to the analog-to-digital converter which computes a desired intermediate frequency signal for the modulator.

21. The system of claim 19 wherein said adaptive cancellation circuit further includes a summing junction which receives and sums said intermediate frequency signal and said incoming radio frequency signal.

22. The system of claim 21 wherein said digital signal processor circuit receives an output of said summing junction.

23. The system of claim 22 wherein said adaptive cancellation circuit further includes a filter coupled to receive the output of said summing junction and a power amplifier coupled to receive the output of said filter.

24. The system of claim 20 wherein said modulator circuit comprises a controllable attenuator which receives and attenuates the radio frequency output signal and an I/Q modulator coupled to said attenuator and to said processor.

25. The system of claim 18 wherein said repeater comprises:
a housing having a pair of substantially 180° oppositely facing surfaces;
at least one antenna element mounted to each of said surfaces for radiating energy in a direction opposite to that of the antenna element mounted to the other of said surfaces; and
an electronic circuit mounted to said housing and operatively coupling signals between at least one antenna element on each of said pair of oppositely facing surfaces of said module.

26. The system of claim 25 wherein said adaptive cancellation circuit forms a part of said electronic circuit.

27. A method of operating a repeater system having at least one donor antenna element for communicating with a base station and at least one null antenna element for communicating with a remote station, and a radio frequency uplink path and a radio frequency downlink path coupled between said donor antenna and said null antenna, said method comprising:
generating a cancellation signal at least one of said radio frequency uplink path and said radio frequency downlink path, which cancellation signal, when added to a radio frequency signal in either of said radio frequency uplink and radio frequency downlink paths, substantially cancels any feedback signal present in said radio frequency signal.

28. The method of claim 27 wherein said generating comprises receiving an incoming radio frequency signal from one of said radio frequency uplink and downlink paths, said radio frequency signal having a feedback signal component, digitally sampling and processing said incoming radio frequency signal to generate an intermediate frequency signal, and using said intermediate frequency signal and a sample of a radio frequency output signal from said one of said radio frequency uplink and downlink paths to generate said cancellation signal.

29. The method of claim 28 wherein said processing comprises downconverting said incoming radio frequency signal to a lower frequency signal for digital sampling, digitizing said lower frequency signal, and digitally computing a desired intermediate frequency signal using said digitized lower frequency signal.

30. The system of claim 28 further including a summing said intermediate frequency signal and said incoming radio frequency signal.

31. The method of claim 30 wherein said digitally processing follows said summing.

32. The method of claim 31 further including filtering and power amplifying following said summing.

33. The method of claim 29 wherein said generating further comprises controllably attenuating the radio frequency output signal and I/Q modulating following said attenuating.

34. The method of claim 27 wherein said repeater further includes a housing having a pair of substantially 180° oppositely facing surfaces, and wherein said method includes mounting at least one antenna element to each of said surfaces for radiating energy in opposite directions; and mounting an electronic circuit within said housing for operatively coupling signals between at least one antenna element on each of said pair of oppositely facing surfaces of said module.

35. A repeater system comprising:
at least one donor antenna element for communicating with a base station and at least one null antenna element for communicating with a remote station; and
an adaptive cancellation circuit which generates a cancellation signal, which when added to a radio frequency signal from either of said donor antenna and said null antenna, substantially cancels any feedback signal present in said radio frequency signal.
